# EUROPEAN PATENT APPLICATION

(11) **EP 1 985 441 A1**
(43) Date of publication of application: **29.10.2008**
(21) Application number: 07380118.5
(22) Date of filing: 27.04.2007
(51) Int. Cl.: B32B 27/04, B32B 27/42, B44C 5/04

(54) **Decorative paper adhered to board**

(71) Applicant: Delicado Sanz, Alicia, 28864 Ajalvir Madrid (ES)
(72) Inventor: Delicado Sanz, Alicia, 28864 Ajalvir Madrid (ES)

(57) **Abstract**

In summary, it is a board that can be of different materials, board treated in its process of manufacture of special form, it adapts a decorative paper with floral motifs, of moon, of angels, stars, clouds to board, obtaining to make it more resistant to external agents, being able to be used in several furniture.

## Description

### OBJECT OF THE INVENTION:

The present invention is made on a board that can be used on different supports, and different finished and colors (any color of letters RAL or PANTONE)

The process of manufacture of this type of boards, and the adaptation of the decorative paper (where the design goes form) to the board, it is produced through impregnation of resin of melamine causing the polymerization of the same ones, these are introduced in the board and producing a perfect hold, causing that this one flows in the surface providing a closing and finished perfect.

Due to these processes, the board with veneer acquires own characteristics, that make it more resistant to the action of external agents like the steam of water, the chemical agents, the erosion, the bordered one, the high temperatures.

### ANTECEDENTS OF THE INVENTION:

Until today they have not been used this type of designs in the sphere of the closets, furniture or offices and nor either at mass-produce.

One is a great investment, reason why the cost and the risk are elevated, from the point of view of a product that can act of diverse forms on the market being able to be accepted or not.

Of there the novel thing of our product, to day of today one is not in the market and it goes directed to a wide sector of the population not to say to all type of people, an age or another one and diverse professional scopes.

### DESCRIPTION OF THE INVENTION:

The main newness is derived that the design to patent covers a wide field in the world of the decoration, we did not speak of a motif or concrete design, this idea goes adapted to all type of people and profession.
- Floral: of any family, species and/or variety of flower or plant, in anyone of its forms, colors, sizes and/or station of the year.
- Of clouds: in any size, forms, color and/or expression, weather conditions, being able to be single, accompanied or combined with other reasons with moons, stars, planets, faces, expressions (smiles)
   ◆ Also and with this one same characteristic any drawing destined to a infantile public, bears, globes, pomps, trees, drops, characters of fantasy such as fairies, goblins, elfs, dwarves, etc..... animals, sport motifs, automobiles...
- Geometric figures or of abstract aspect.

This type of design is used on models:
- Covers
- Doors of step
- Doors of closet (sliding doors, Folding doors, Practicable doors, Folding-sliding doors, etc.)
- on boards for interiors of closet or office (back, ceilings, grounds, lateral sides, vertical sides, seen side or hidden, shelves, drawer, covered of vertical and horizontal column)
- Like covered of wall and/or separation (dividing screen) in smooth, with yaga or without yaga, vertical or horizontal and all type of finished for office screens.
- Cabins of cleanliness.
- In perfilería (a type of wood) (gunners, jambs, all type of moldings, mouths and closings)

The variety of boards on which our design can be applied is very wide, like the thickness (it can vary of 3 to 50 mm) and measured of such.
- Fiber board: Constituted by fibers. It has a very smooth and regular surface, a high dense in surface and a dense and homogenous soul. Their high density and quality of surface facilitate the mechanized one and it is appropriate for several finished (lac, melamine, lacquer, plated with veneer)
- Board of melamine: it includes different support and/or characteristics (chipboard in crude, board of fibers, shaving, alveolar board, non-flammable board)
- Plasticized chipboard: chipboard that receives in its faces a melamine covering in smooth colors, of imitation of wood, granites or fantasy.

The finished ones of melamine are very varied smooth, of pore or cathedral, finished soft rain, silk or sandpapering. The finished pore or cathedral consists of engraving smoothly the grain of the wood so that it is perceptible at sight and to the tact. Finished rain is a engrave of small lines as if outside rain.
- Plated chipboard: it is a chipboard in whose sides have stuck natural wood plate. It is possible to dye, to varnish, to polish, to paint and to lacquer.
- Tablex: made from humid fibers of wood submitted great pressure and elevated temperature. In order to unite fibers, natural resins in the same ones are used.
- Plasticized Tablex: its smooth side has been covered with melamine of smooth colors, of fantasy, of granite or imitation of wood.
- Postformed board. It is characterized by his resistance and rounded edge, made up of a plated decorative lamination in a chipboard, it is suitable for dry or humid environment, with rounded edge in one or both sides.
- Acoustic board: it is characterized by excellent soundproofing, decorative quality, fire resistance and facility of maintenance.
- Vinyl board or PVC
- Plates of stratified of high pressure (thickness of 0.8 to 1 mm): traditional decorative sheet of high performance. Produced by layers of papers with characteristics very specify, specially selected and impregnated with thermosetting synthetic resins, solder to each other under the action of high pressure and temperature. Available in a wide range of smooth colors, abstract wood and designs.

### DESCRIPTION OF THE DRAWINGS:

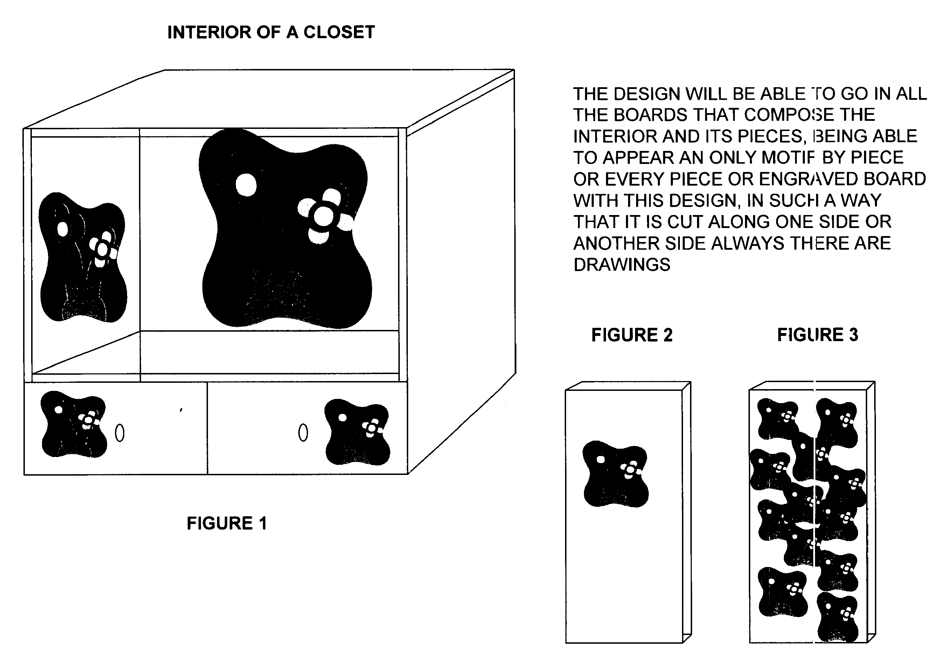

(Figure 1) it is the design with an only floral motif in each board that compose the interior of the furniture.
(Figure 2) it is an only board with an only floral motif
(Figure 3) it is an only board with several floral motifs

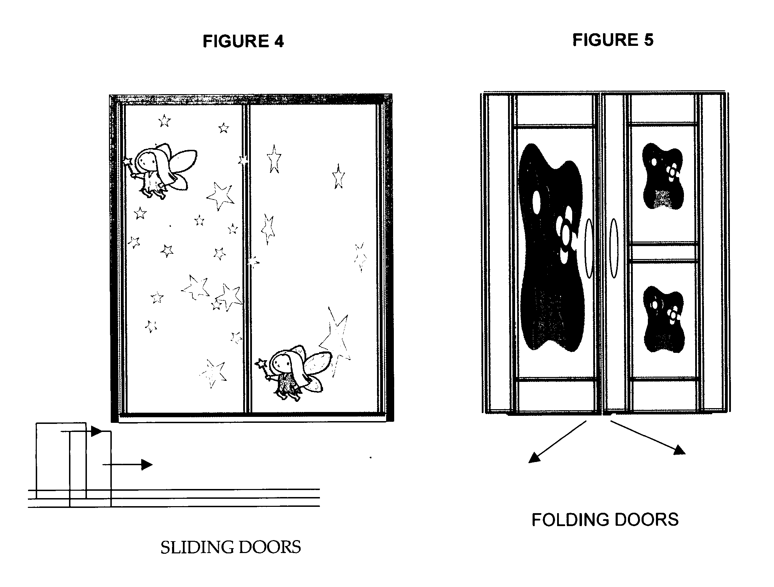

(Figure 4) it is sliding doors with drawings of angels
(Figure 5) it is folding doors with several floral motifs

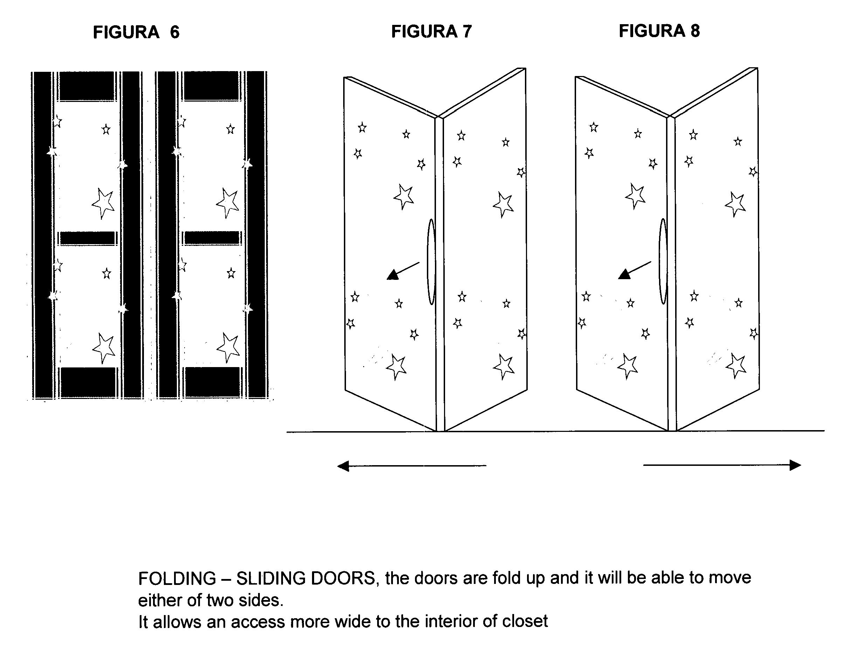

(Figure 6) it is folding-sliding doors with motifs of moons and stars
(Figure 7) the drawing shows to the movement towards the left of folding doors with motifs of moons and stars
(Figure 8) the drawing shows to the movement towards the right of folding doors with motifs of moons and stars

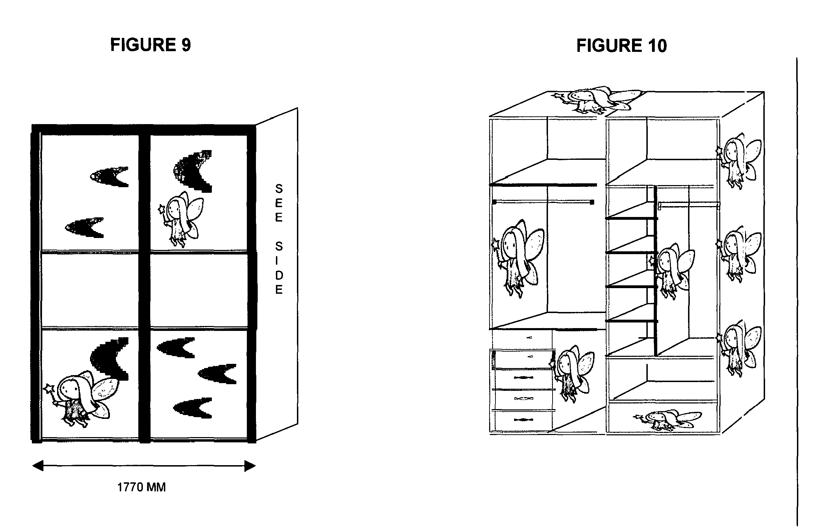

(Figure 9) the drawing shows the doors of a closet which are opened towards outside with motifs of angels
(Figure 10) It is the interior of a closet with motifs of angels

### SPECIAL EXECUTION OF THE INVENTION:

The procedure for the creation of this type of boards and the adaptation of the decorative paper to the board, it is made through the novel procedure which consists of a impregnation of resin of melamine, which causing its polymerization, these are introduced in the board and producing a perfect hold, which causing that this one flows in the surface, providing a perfect finished and closing, therefore it is made a different treatment of the board from the already existing ones.

Due to these processes, the board with plate acquires own characteristics, that it makes more resistant to the action of external agents such as the steam of water, the chemical agents, the erosion, the bordered one, the high temperatures, and nobodies of similar or analogous nature.

The diversity of boards on which the design can be applied is very wide, as much in its thickness (it can vary of 0.8 to 50 mm) as in the measurements of such (Of 600 to 5700 mm estimated measurements for high and wide)

Likewise, the designs will be able to go combined with another types of finished as much of board (melamine), as of crystal and/or mirror.

It is not considered necessary to make this description more extensive so that any expert on the subject understands the reach of the invention and the advantages that of the same one are derived. The terms, in which this memory has been written up, will have to be taken in a wide and not limiting sense.

The form, size and laying of boards and the several motifs will be able changed as long as it does not suppose an alteration of the essential characteristics of the invention, that are claimed next.

## Claims

1. The board is **characterized** so that it is created using a impregnation of resin of melamine causing the polymerization of the same ones, these are introduced in the board and producing a perfect hold of the same ones to the surface to which it is wanted to combine.

2. The board can be of fiber, chipboard plasticized, chipboard plated, tablex, of tablex plasticized, postformed, acoustic board, vinyl board or PVC, and plates of stratified of high pressure (thickness of 0.8 to 1 mm)

3. The design can be used on the following furniture: Covers, Doors of step, closet doors, on boards for interiors of closet, like covered of wall and/or separation (dividing screen) in smooth, in cabins of cleanliness, in perfilería (a type of wood) and interior decoration of office.

## Amended claims

### Amended claims in accordance with Rule 137(2) EPC.

**1.** The wooden board is the initial basis of the product on which the veneer of decorative paper is settled.
The variety of boards on which the design can be applied is very wide, like the thickness (it can vary of 3 to 50 mm) and measures of such ones.
Fiber board: Constituted by fibers. It has a very smooth and regular surface, a high dense in surface and a dense and homogenous soul.
Board of melamine: it includes different support and/or characteristics (chipboard in crude, board of fibers, shaving, alveolar board, non-flammable board).
Plasticized chipboard: chipboard that receives in its faces a melamine covering in smooth colors, of imitation of wood, granites or fantasy.
Plated chipboard: it is a chipboard in whose sides have stuck natural wood plate. It is possible to dye, to varnish, to polish, to paint and to lacquer.
Tablex: made from humid fibers of wood submitted great pressure and elevated temperature.
Plasticized Tablex: its smooth side has been covered with melamine of smooth colors, of fantasy, of granite or imitation of wood.
Postformed board: It is **characterized by** his resistance and rounded edge, made up of a plated decorative lamination in a chipboard, it is suitable for dry or humid environment, with rounded edge in one or both sides.
Acoustic board: it is **characterized by** excellent soundproofing, decorative quality, fire resistance and facility of maintenance.
Vinyl board or PVC.
Plates of stratified of high pressure (thickness of 0.8 to 1 mm): traditional decorative sheet of high performance. Produced by layers of papers with characteristics very specify, specially selected and impregnated with thermosetting synthetic resins, solder to each other under the action of high pressure and temperature.

**2.** floral Decorative Paper of the claim 1: of any family, species and/or variety of flower or plant, in anyone of its forms, colors, sizes and/or station of the year.
Decorative Paper of Clouds of the claim 1: in any size, forms, color and/or expression, weather conditions, being able to be single, accompanied or combined with other reasons with moons, stars, planets, faces, expressions (smiles) and any drawing destined to a infantile public, bears, globes, pomps, trees, drops, characters of fantasy such as fairies, goblins, elfs, dwarves, etc..... animals, sport motifs, automobiles...
Decorative Paper of Geometric figures or of abstract aspect of the claim 1.

**3.** The design is the union of the board of claim 1 and the decorative paper of claim 2, **characterized** so that it is created using a impregnation of resin of melamine causing the polymerization of the same ones, these are introduced in the board and producing a perfect hold of the same one to the surface to which it is wanted to combine, in this case the decorative paper.
The melamines are an imitation of wood: they are the paper on which the design is fixed, and using resins to be settled on the chipboard.
The designs are already prepared. In contrast to the market, where they simply are made with only one colour imitating the wood.
The touch of the board with printed decorative paper is the same as the touch of one of normal wood, especially developed for children. It is washed in the same way as one of normal wood.
The final combination of board plus decorative paper is resistant to the action of external agents like the steam of water, the chemical agents, the erosion, the bordered one and the high temperatures.

**4.** The design can be used on the following furniture: Covers, Doors of step, closet doors, on boards for interiors of closet, like covered of wall and/or separation (dividing screen) in smooth, in cabins of cleanliness, in perfileria (a type of wood) and interior decoration of office.
The perfileríaa consists of the use of "extrusionado" (frame where the board is fixed and it is prepared to be posteriorly lacqued) in gunners, jambs, all type of moldings, mouths and closings.
